# EUROPÄISCHE PATENTSCHRIFT

(11) **EP 3 145 769 B1**
(45) Veröffentlichungstag und Bekanntmachung des Hinweises auf die Patenterteilung: **14.03.2018**
(21) Anmeldenummer: 15719463.0
(22) Anmeldetag: 27.04.2015
(51) Int. Cl.: B60T 13/68, B60T 13/58, B60T 13/04

(54) **ELEKTROPNEUMATISCHE BREMSSTEUEREINRICHTUNG MIT AUTOMATISCHER ENTLÜFTUNG DER FEDERSPEICHERBREMSE BEI STROMAUSFALL**
ELECTROPNEUMATIC BRAKE CONTROL DEVICE WITH AUTOMATIC VENTILATION OF THE SPRING APPLIED BRAKE IN THE EVENT OF A POWER LOSS
MOYEN DE COMMANDE DE FREINAGE ÉLECTROPNEUMATIQUE AVEC PURGE AUTOMATIQUE DU FREIN À ACCUMULATION EN CAS DE PANNE DE COURANT

(30) Priorität: 23.05.2014 DE 102014107278
(43) Veröffentlichungstag der Anmeldung: 29.03.2017
(73) Patentinhaber: KNORR-BREMSE Systeme für Nutzfahrzeuge GmbH, 80809 München (DE)
(72) Erfinder: LEINUNG, Andreas, 81245 München (DE); MICHALSKI, Max, 85579 Neubiberg (DE)
(86) Internationale Anmeldenummer: PCT/EP2015/059023
(87) Internationale Veröffentlichungsnummer: WO 2015/176916

(56) Entgegenhaltungen:
- WO-A1-2007/065498
- DE-A1-102006 041 008

## Beschreibung

Die Erfindung betrifft eine elektropneumatische Bremssteuereinrichtung zur Steuerung einer Feststellbremse eines Fahrzeugs mit Betriebbremse und Feststellbremse gemäß dem Oberbegriff von Anspruch 1, eine elektropneumatische Bremsanlage eines Fahrzeugs umfassend eine solche elektropneumatische Bremssteuereinrichtung gemäß Anspruch 8 sowie ein Fahrzeug mit einer solchen elektropneumatischen Bremsanlage nach Anspruch 12.

Bei solchen elektropneumatischen Bremssteuereinrichtungen stellt ein Ausfall der elektrischen Energieversorgung ein Problem dar, weil dann die elektromagnetische Ventileinrichtung nicht mehr betätigt werden kann. Zudem fällt auch der elektrische Feststellbremssignalgeber aus. Es wurde daher schon vorgeschlagen, die Federspeicherbremszylinder der Federspeicherbremse automatisch zu entlüften, wenn die elektrische Energieversorgung ausfällt. Eine solche Notbremsung ist jedoch während einer laufenden Fahrt problematisch, weil dann das Fahrzeug an einem ungeeigneten ort zum Stillstand kommen kann und auch weil eine solche Notbremsung mit schneller Entlüftung der Federspeicherbremse unter hoher Bremskraft stattfindet, wobei die Gefahr eines Auffahrunfalls durch nachfolgende Fahrzeuge besteht.

Gemäß der EP 1 968 830 B1 wird zur Lösung dieses Problems vorgeschlagen, bei einer gattungsbildenden elektropneumatischen Bremssteuereinrichtung in die Steuerleitung der luftmengenverstärkenden Ventileinrichtung (Relaisventil) zwischen dem Vorratsanschluss und einem elektrischen Bistabilventil ein 3/2-Wegeventil anzuordnen, wobei das Bistabilventil mit dem pneumatischen Steueranschluss des Relaisventils verbindbar ist. In einer Durchlassstellung des 3/2-Wege-Ventils verbindet dieses den Vorratsanschluss mit dem Bistabilventil und damit mit dem Steueranschluss des Relaisventils, um die Federspeicherbremse gelöst zu halten (Fahrstellung). In einer Entlüftungsstellung verbindet das 3/2-Wegeventil indes das Bistabilventil mit einer Drucksenke (Parkstellung), so dass der pneumatische Steueranschluss des Relaisventils entlüftet und dadurch die Federspeicherbremse zugespannt wird. Das 3/2-Wegeventil wird vom Vorratsdruck der Betriebsbremse pneumatisch derart gesteuert, dass die Durchlass- oder Fahrstellung eingenommen wird, wenn der Vorratsdruck der Betriebsbremse eine Druckschwelle überschreitet, aber die Entlüftungs- oder Parkstellung eingenommen wird, falls der Vorratsdruck der Betriebsbremse die Druckschwelle unterschreitet. Bei intakter elektrischer Energieversorgung liefert der Kompressor bei einem durch Betätigung der Betriebsbremse bedingtem Absenken des Vorratsdrucks in den Druckluftvorräten durch Nachförderung entgegen, so dass der Schwellwert unter diesen Umständen nicht unterschritten wird. Bei einem Ausfall der elektrischen Energieversorgung fällt in der Regel aber die Antriebsmaschine des Fahrzeugs und damit eine Nachförderung durch den Kompressor aus, so dass bei wiederholter Betätigung der Betriebsbremse die Druckluftvorräte der Betriebsbremse entleert und dadurch der als Steuerdruck für das 3/2-Wegeventil wirkende Vorratsdruck unter den Schwellwert fällt. Das 3/2-Wegeventil schaltet dann automatisch in seine Entlüftungs- oder Parkstellung, in welcher die Federspeicherbremse zugespannt wird. Da zuvor die Betriebsbremse wiederholt betätigt wurde, wird davon ausgegangen, dass sich dass Fahrzeug dann bereits in einem eingebremsten Zustand bzw. im Stillstand befindet, so dass die oben genannten Nachteile vermieden werden könnten.

Eine gattungsbildende elektropneumatische Bremssteuereinrichtung ist aus WO 2007/065498 A1 bekannt.

Der Erfindung liegt die Aufgabe zugrunde, eine oben beschriebene elektropneumatische Bremssteuereinrichtung derart fortzubilden, dass sie bei einfacherem Aufbau eine höhere Zuverlässigkeit aufweist.

Diese Aufgabe wird erfindungsgemäß durch die Merkmale von Anspruch 1 gelöst.

### Offenbarung der Erfindung

Die Erfindung ist gekennzeichnet durch ein pneumatisch gesteuertes 2/2-Wegeventil, mit einem Einlass, welcher mit der Steuerluftleitung oder mit dem Arbeitsausgang der luftmengenverstärkenden Ventileinrichtung verbindbar oder verbunden ist, einem mit einer Drucksenke verbundenen Auslass und mit einem pneumatischen Steueranschluss für einen Vorratsdruck der Betriebsbremse, wobei das pneumatisch gesteuerte 2/2-Wegeventil zwei Stellungen aufweist, eine Durchlassstellung, welche sich bei einem Vorratsdruck der Betriebsbremse kleiner als ein vorbestimmter Druckgrenzwert einstellt und in welcher der Einlass mit dem Auslass verbunden ist, und eine Sperrstellung, welche sich bei einem Vorratsdruck der Betriebsbremse größer als ein vorbestimmter Druckgrenzwert einstellt und in welcher der Einlass gegenüber dem Auslass gesperrt ist.

Dabei ist der Einlass des pneumatisch gesteuerten 2/2-Wegeventils beispielsweise direkt oder indirekt, beispielsweise über eine weitere Ventileinrichtung mit der Steuerluftleitung oder mit dem Arbeitsausgang der luftmengenverstärkenden Ventileinrichtung verbindbar oder verbunden.

Da sämtliche Magnetventile der elektropneumatischen Bremssteuereinrichtung in der elektromagnetischen Ventileinrichtung zusammengefasst bzw. angeordnet sind, ist in der Steuerluftleitung zwischen dem Auslass der elektromagnetischen Ventileinrichtung und dem pneumatischen Steueranschluss der luftmengenverstärkenden Ventileinrichtung gezogenen Steuerluftleitung kein Magnetventil angeordnet ist, dessen von einer Bestromung oder Nicht-Bestromung abhängige Schaltstellungen eine Strömungsverbindung zwischen dem Auslass der elektromagnetischen Ventileinrichtung und dem pneumatischen Steueranschluss der luftmengenverstärkenden Ventileinrichtung durch die Steuerluftleitung be- oder verhindern könnten.

Zum einen wird daher anstatt eines 3/2-Wegeventils ein 2/2-Wegeventil zur Entlüftung im Fall eines Ausfalls der elektrischen Energieversorgung eingesetzt, welches einfacher herstell- und montierbar ist.

Zum andern wird dieses 2/2-Wegeventil nicht wie beim Stand der Technik vom Vorratsluftanschluss aus gesehen den Magnetventilen der elektromagnetischen Ventileinrichtung vorgeordnet, sondern nachgeordnet. Weiterhin ist dieses 2/2-Wegeventil dann nicht in der Steuerluftleitung für die luftmengenverstärkende Ventileinrichtung und in Bezug zu den dortigen Magnetventilen in Reihe geschaltet, sondern in einer von der Steuerluftleitung abzweigenden Zweigleitung. Dies bringt den weiteren Vorteil mit sich, dass keine dem 2/2-Wegeventil nachgeordneten Magnetventile mehr vorhanden sind, deren Schaltstellung eine Entlüftung des pneumatischen Steueranschlusses der luftmengenverstärkenden Ventileinrichtung be- oder verhindern könnten. Dadurch werden Funktionssicherheit und Zuverlässigkeit der Bremssteuereinrichtung erhöht.

Im Hinblick auf die Funktionalität der elektropneumatischen Bremssteuereinrichtung liefert der Kompressor bei intakter elektrischer Energieversorgung bei einem durch Betätigung der Betriebsbremse bedingtem Absenken des Vorratsdrucks in den Druckluftvorräten der Betriebsbremskreise durch Nachförderung entgegen, so dass der Druckgrenzwert unter diesen Umständen nicht unterschritten wird. Dadurch verbleibt oder schaltet das 2/2-Wegeventil in der Sperr- oder Fahrstellung, in der die Steuerluftleitung der luftmengenverstärkenden Ventileinrichtung gegenüber der Drucksenke gesperrt ist.

Bei einem Ausfall der elektrischen Energieversorgung fällt jedoch die Nachförderung durch den Kompressor aus, so dass bei wiederholter Betätigung der Betriebsbremse die Druckluftvorräte der Betriebsbremse entleert und dadurch der als Steuerdruck für das 2/2-Wegeventil wirkende Vorratsdruck unter den Druckgrenzwert fällt. Das 2/2-Wegeventil schaltet dann automatisch z.B. durch Federbelastung in seine Entlüftungs- oder Parkstellung, in welcher die Steuerluftleitung entlüftet und die Federspeicherbremse bzw. die an den Arbeitsanschluss der luftmengenverstärkenden Ventileinrichtung angeschlossenen Federspeicherbremszylinder zugespannt werden, um die Park- oder Feststellbremse zuzuspannen. Da zuvor die Betriebsbremse wiederholt betätigt wurde, wird davon ausgegangen, dass sich dass Fahrzeug bereits in einem eingebremsten Zustand bzw. im Stillstand befindet. Dadurch wird mit hoher Wahrscheinlichkeit sichergestellt, dass die Parkbremse bei einem Ausfall der elektrischen Energieversorgung erst im Stillstand des Fahrzeugs automatisch eingelegt wird.

Durch die in den Unteransprüchen aufgeführten Maßnahmen sind vorteilhafte Weiterbildungen und Verbesserungen der in Anspruch 1 angegebenen Erfindung möglich.

Bevorzugt wird das 2/2-Wegeventil durch ein Membranventil gebildet, dessen Öffnungsdruck z.B. durch eine in ihrer Vorspannung einstellbare Feder auf einfache Weise einstellbar ist.

Gemäß einer Weiterbildung stellt die elektropneumatische Bremssteuereinrichtung eine Baueinheit dar, wobei das 2/2-Wegeventil in die Baueinheit integriert sein kann oder nicht.

Besonders bevorzugt ist das 2/2-Wegeventil gegen die Wirkung eines am pneumatischen Steueranschluss anstehenden Vorratsdrucks der Betriebsbremse in die Durchlassstellung federbelastet. Wenn dann der Vorratsdruck der Betriebsbremse unter den Druckgrenzwert fällt, sorgt die Federbelastung des Ventilglieds für ein automatisches Umschalten des 2/2-Wegeventils in die Durchlass- oder Entlüftungsstellung.

Besonders bevorzugt weist die elektropneumatische Bremssteuereinrichtung wenigstens einen zweiten Ausgangsanschluss für ein Anhängersteuerventil auf, wobei die Ventileinrichtung mit der Steuerluftleitung verbunden und ausgebildet ist, dass bei einem durch die Durchlassstellung des pneumatisch gesteuerten 2/2-Wegeventils bedingten Druckabfall in der Steuerluftleitung ein den Zustand Parken repräsentierendes Drucksignal an den zweiten Ausgangsanschluss aussteuert. Dieses Drucksignal kann in einem Be- oder Entlüftungssignal bestehen. Da Anhängersteuerventile in Bezug auf den Eingangsdruck invertierend wirken, wird bei einem durch den Ausfall der elektrischen Energieversorgung bedingtem Schalten des 2/2-Wegeventils in die Durchlass- oder Parkstellung durch die elektromagnetische Ventileinrichtung, in welche der dadurch bedingte Druckabfall in der Steuerluftleitung rückgekoppelt wird, der Steuerdruck am zweiten Ausgangsanschluss für das Anhängersteuerventil beispielsweise reduziert und dadurch der Bremsdruck für die Betriebsbremsen im Anhänger auf Zuspanndruck erhöht. Dadurch werden bei einem Ausfall der elektrischen Energieversorgung nicht nur die Federspeicherbremszylinder des Zugfahrzeugs, sondern auch die Betriebsbremsen des Anhängers automatisch zugespannt.

Die Drucksenke kann beispielsweise durch einen in die Atmosphäre mündenden Entlüftungsanschluss oder durch wenigstens einen Druckluftvorrat gebildet werden, insbesondere durch einen Druckluftvorrat eines Betriebsbremskreises, welcher dann aufgrund des Ausfalls der Energieversorgung entlüftet wird oder bereits ist, so dass zwischen der Steuerluftleitung und dem Druckluftvorrat das notwendige Druckgefälle vorhanden ist.

Besonders dann, wenn die Drucksenke durch wenigstens einen Druckluftvorrat gebildet wird, ist gemäß einer Weiterbildung in einer Druckluftverbindung zwischen dem Einlass des 2/2-Wegeventils und der Steuerluftleitung ein Rückschlagventil angeordnet, durch welches eine erwünschte Druckluftströmung von der Steuerluftleitung zum Einlass des 2/2-Wegeventils bzw. zur Drucksenke in der Durchlassstellung ermöglicht, aber eine unerwünschte Druckluftströmung von dem Einlass bzw. der Drucksenke in die Steuerluftleitung unterbunden wird.

Die Erfindung betrifft auch eine elektropneumatische Bremsanlage eines Fahrzeugs umfassend eine oben beschriebene elektropneumatische Bremssteuereinrichtung, mit einer Betriebsbremse und einer Feststellbremse, insbesondere eines schweren Nutzfahrzeugs mit Anhängerbetrieb, wobei die Betriebsbremse ein Bremspedal und wenigstens einen von einem Kompressor mit Druckluft versorgten Druckluftvorrat aufweist, aus welchem abhängig von einer Betätigung des Bremspedals Druckluft in druckluftbetätigbare Betriebsbremszylinder einsteuerbar ist. Die Feststellbremse weist einen elektrischen Feststellbremssignalgeber auf, welcher Feststellbremssignale in den Signalanschluss der elektropneumatischen Bremssteuereinrichtung einsteuert, deren erster Ausgangsanschluss an wenigstens einen Federspeicherbremszylinder angeschlossen ist, wobei der pneumatische Steueranschluss des 2/2-Wegeventils mit dem wenigstens einen Druckluftvorrat der Betriebsbremse mittelbar oder unmittelbar verbunden ist. Eine mittelbare Verbindung bedeutet in diesem Zusammenhang, dass dem pneumatischen Steueranschluss des 2/2-Wegeventils und dem wenigstens einen Druckluftvorrat Elemente wie z.B. Druckbegrenzungsventile, Überströmventile, Wechselventile oder Dergleichen zwischengeschaltet sein können, welche dafür sorgen, dass der an dem pneumatischen Steueranschluss anstehende Vorratsdruck beeinflusst oder verändert wird. Bei einer unmittelbaren Verbindung steht demgegenüber der Vorratsdruck des wenigstens einen Druckluftvorrats unverändert am pneumatischen Steueranschluss des 2/2-Wegeventils an.

In üblichen elektropneumatischen Bremsanlagen wie EBS-Systemen (Elektronisch geregeltes Bremssystem) sind üblicherweise wenigstens zwei Betriebsbremskreise mit jeweils einem eigenen Druckluftvorrat vorhanden, nämlich ein erster Betriebsbremskreis mit einem ersten Druckluftvorrat und ein zweiter Betriebsbremskreis mit einem zweiten Druckluftvorrat. Bevorzugt ist dann bei einer solchen elektropneumatischen Bremsanlage eine Auswahleinrichtung zur Weitersteuerung des höheren Vorratsdrucks aus den Vorratsdrücken der Druckluftvorräte (erster Druckluftvorrat, zweiter Druckluftvorrat) an den pneumatischen Steueranschluss des 2/2-Wegeventils vorgesehen, mit einem ersten, mit dem ersten Druckluftvorrat des ersten Betriebsbremskreises verbundenen Einlass, einem zweiten mit dem zweiten Druckluftvorrat des zweiten Betriebsbremskreises verbundenen Einlass und einem mit dem pneumatischen Steueranschluss des 2/2-Wegeventils verbundenen Auslass. Diese Auswahleinrichtung wird beispielsweise durch ein Wechselventil gebildet, das dann ein logisches "ODER"-Glied bildet.

Durch diese Maßnahmen wird der Steuerdruck für das 2/2-Wegeventil durch den jeweils höheren Vorratsdruck der Betriebsbremskreise gebildet, so dass nichts bereits ein Ausfall eines einzigen Betriebsbremskreises, z.B. aufgrund einer Leckage zu einem Vorratsdruck in diesem Betriebsbremskreis führt, der unterhalb des Druckgrenzwert liegt und dann ein unnötiges Umschalten des 2/2-Wegeventils in die Durchlass- oder Parkstellung führt, da in einem solchen Leckagefall nicht zwangsläufig auch ein Ausfall der elektrischen Energieversorgung vorliegen muss. Diese Maßnahmen verbessern daher die Funktionssicherheit der elektropneumatischen Bremsanlage.

Gemäß einer Weiterbildung ist zwischen dem ersten Druckluftvorrat und dem ersten Einlass der Auswahleinrichtung und dem zweiten Druckluftvorrat und dem zweiten Einlass der Auswahleinrichtung jeweils eine Drosseleinrichtung vorgesehen ist, deren Drosselquerschnitt wenigstens so klein ist, dass ein Volumenstrom, der zwischen dem ersten Einlass und dem zweiten Einlass der Auswahleinrichtung unbeabsichtigt entstanden ist, kleiner ist als ein minimaler Liefervolumenstrom, welchen der Kompressor unter minimaler Förderleistung in die Druckluftvorräte nachzuliefern vermag. Ein solcher unerwünschter Volumenstrom zwischen dem ersten Einlass und dem zweiten Einlass der Auswahleinrichtung kann beispielsweise durch eine Zwischenstellung der Auswahleinrichtung bzw. des Wechselventils entstehen. Diese Maßnahmen verbessern daher die Funktionssicherheit der elektropneumatischen Bremsanlage.

Die Erfindung betrifft auch ein Fahrzeug, umfassend eine oben beschriebene elektropneumatische Bremsanlage, insbesondere ein für den Anhängerbetrieb ausgerüstetes Zugfahrzeug mit einem Anhängersteuerventil.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.1: einen schematischen Schaltplan eines Ausschnitts aus einer elektropneumatischen Bremsanlage eines Zugfahrzeugs einer Zugfahrzeug-Anhängerkombination mit einer elektropneumatischen Bremssteuereinrichtung gemäß einer bevorzugten Ausführungsform der Erfindung;
- Fig.2: einen schematischen Schaltplan eines Ausschnitts aus einer elektropneumatischen Bremsanlage eines Zugfahrzeugs einer Zugfahrzeug-Anhängerkombination mit einer elektropneumatischen Bremssteuereinrichtung gemäß einer weiteren Ausführungsform der Erfindung.

### Beschreibung der Ausführungsbeispiele

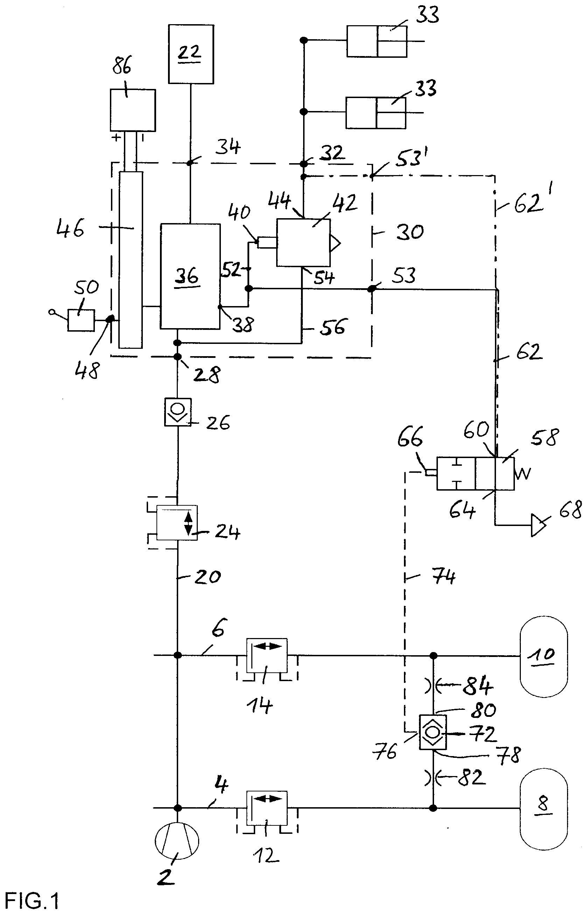

Fig.1 zeigt einen Ausschnitt einer elektropneumatischen Bremsanlage 1 einer Zugfahrzeug-Anhängerkombination mit Betriebsbremse und Feststellbremse. Die elektropneumatische Bremsanlage 1 ist bevorzugt eine hinsichtlich des Bremsdrucks elektronisch geregelte Bremsanlage (EBS).

Die Bremsanlage 1 wird in bekannter Weise von einem von einer Antriebsmaschine, insbesondere einer selbstzündenden Brennkraftmaschine getriebenen Kompressor 2 mit Druckluft versorgt. Hierzu steht der Kompressor 2 über zwei Druckluftversorgungsleitungen 4, 6 mit zwei Druckluftvorräten 8, 10 in Verbindung, wobei jeder der Druckluftvorräte 8, 10 einem Betriebsbremskreis der Betriebsbremse zugeordnet ist. Zwischen dem Kompressor 2 und den Druckluftvorräten 8, 10 ist in den Druckluftversorgungsleitungen 4, 6 jeweils ein Überströmventil 12, 14 angeordnet, mit bekanntem Zweck bzw. Funktion. Es herrscht insoweit Kreistrennung.

Die weiteren Elemente der Betriebsbremse wie z.B. elektrisches Bremspedalmodul, Bremssteuergerät, Druckregelmodule, ABS-Drucksteuerventile, Betriebsbremszylinder sind hier nicht gezeigt, weil sie keinen Einfluss auf die Erfindung haben.

Von den beiden Druckluftversorgungsleitungen 4, 6 der beiden Betriebsbremskreise zweigt eine Druckluftversorgungsleitung 20 für einen Feststellbremskreis ab. Die Feststellbremse wird hier also von den Druckluftvorräten 8, 10 der Betriebsbremskreise druckluftversorgt. Alternativ könnte für den Feststellbremskreis auch ein eigener Druckluftvorrat vorhanden sein.

In der Druckluftversorgungsleitung 20 des Feststellbremskreises sind zur Kreisabsicherung ein Überströmventil 24 sowie ein Rückschlagventil 26 angeordnet. Die Druckluftversorgungsleitung 20 des Feststellbremskreises ist weiterhin an einen Vorratsanschluss 28 einer elektropneumatischen Bremssteuereinrichtung 30 angeschlossen, mit welcher verschiedene Funktion im Zusammenhang mit der Feststellbremse gesteuert werden können, insbesondere bekannte Funktionen wie Fahrfunktion, Parkfunktion, Testfunktion, Streckbremsfunktion sowie Hilfsbremsfunktion.

Da die elektropneumatische Bremssteuereinrichtung 30 als Baueinheit ausgeführt und als solche an eine bestehende Bremsanlage angeschlossen werden kann, kann sie auch als Feststell- oder Parkbremsmodul (Electronic Parking Brake Module, EPBM) bezeichnet werden. An einen ersten Ausgangsanschluss 32 der elektropneumatischen Bremssteuereinrichtung 30 sind beispielsweise zwei Federspeicherbremszylinder 33 an der Hinterachse des Zugfahrzeugs angeschlossen. Ein zweiter Ausgangsanschluss 34 steht mit einem elektropneumatischen Anhängersteuerventil oder -modul 22 in Verbindung, welcher die Anhängerbremsen steuert.

Die elektropneumatische Bremssteuereinrichtung 30 beinhaltet eine hier lediglich vereinfacht als Kästchen dargestellte elektromagnetische Ventileinrichtung 36 mit Magnetventilen wie Einlassventil, Auslassventil, Bistabilventil etc., durch welche unter anderem an einem Anschluss 38 ein pneumatischer Steuerdruck für einen pneumatischen Steuereingang 40 eines Relaisventils 42 erzeugt wird, dessen Arbeitsausgang 44 mit dem ersten Ausgangsanschluss 32 in Verbindung steht. Weiterhin ist der zweite Ausgangsanschluss 34 für das Anhängersteuermodul 22 mit der Ventileinrichtung 36 steuerbar verbunden.

Die elektropneumatische Bremssteuereinrichtung 30 beinhaltet eine elektronische Steuereinrichtung 46 zur Steuerung der Magnetventile der elektropneumatischen Ventileinrichtung 36, unter anderem abhängig von über einen Feststellbremssignalanschluss 48 einsteuerten Feststellbremssignalen, die von einem durch den Fahrer betätigbaren Feststellbremssignalgeber 50 wie einen Wippschalter oder Bedienhebel erzeugt werden. Weiterhin werden in die elektronische Steuereinrichtung 46 Signale von integrierten Sensoreinrichtungen wie beispielsweise Drucksensoren eingesteuert, welche die Ist-Drücke an den Ausgangsanschlüssen 32, 34 messen, um durch einen Soll-Istwertabgleich in der Steuereinrichtung 46 eine Bremsdruckregelung zu realisieren, wie sie beispielsweise im Rahmen einer Hilfsbremsung von Vorteil ist. Der pneumatische Teil der elektropneumatischen Ventileinrichtung 36 wird durch den Vorratsanschluss 28 mit der Druckluft des Feststellbremskreises versorgt.

Der Steuereingang 40 des Relaisventils 42 ist über eine Steuerluftleitung 52 mit dem Auslass 38 der elektropneumatischen Ventileinrichtung 36 und ein Vorratseingang 54 über eine Druckluftverbindung 56 mit dem Vorratsanschluss 28 verbunden. Es moduliert auf der Basis des Vorratsdrucks abhängig von dem in der Steuerluftleitung 52 herrschenden und von der elektropneumatischen Ventileinrichtung 36 ausgesteuerten Steuerdruck einen Arbeitsdruck an seinem Arbeitsausgang 44, welcher dann über den ersten Ausgangsanschluss 32 in die Federspeicherbremszylinder 33 eingesteuert werden. Zum Zuspannen der Federspeicherbremszylinder 33 wird der erste Ausgangsanschluss 32 entlüftet und zum Lösen belüftet.

Da bevorzugt sämtliche Magnetventile bzw. elektrisch betätigten Komponenten in der elektromagnetischen Ventileinrichtung 36 zusammengefasst sind, sind in der Steuerluftleitung 52 auch bevorzugt keine Magnetventile vorhanden.

Denkbar ist aber ein Wechselventil in der Steuerluftleitung, welches aus Anti-Compound-Gründen den größeren Druck aus dem von der Ventileinrichtung 36 ausgesteuerten Steuerdruck und einem über einen hier nicht gezeigten Betriebsbremsdruckanschluss eingesteuerten Betriebsbremsdruck an den Steuereingang 40 des Relaisventils 42 steuert. Für den Anschluss der ersten Druckverbindung 62 an die Bremssteuereinrichtung 30 ist an dieser ein entsprechender dritter Ausgangsanschluss 53 vorgesehen.

Weiterhin umfasst die Bremsanlage ein pneumatisch gesteuertes 2/2-Wegeventil 58, mit einem Einlass 60, welcher hier bevorzugt unmittelbar oder direkt über eine erste Druckverbindung 62 mit der Steuerluftleitung 52 verbunden ist, einem mit einer Drucksenke 68 verbundenen Auslass 64 und mit einem pneumatischen Steueranschluss 66 für einen Vorratsdruck der Betriebsbremse. Die Drucksenke wird beim Ausführungsbeispiel von Fig.1 beispielsweise durch eine Entlüftung 68 des 2/2-Wegeventils 58 gebildet.

Wie in Fig.1 durch die als strichpunktierte Linie dargestellte erste Druckverbindung 62' gezeigt, kann der Einlass 60 des pneumatisch gesteuerten 2/2-Wegeventils 58 alternativ mit dem Arbeitsausgang 44 des Relaisventils 42 bzw. mit dem ersten Ausgangsanschluss 32 verbunden oder verbindbar sein, gegebenenfalls auch mittels einer weiteren Ventileinrichtung. Dann ist ein entsprechender Anschluss 53' vorgesehen. Alternativ könnte die erste Druckverbindung 62' auch an den ersten Ausgangsanschluss 32 angeschlossen sein.

Das pneumatisch gesteuerte 2/2-Wegeventil 58 weist zwei Stellungen auf, eine Durchlass- oder Parkstellung, welche sich bei einem Vorratsdruck der Betriebsbremse am Steueranschluss 66 kleiner als ein vorbestimmter Druckgrenzwert einstellt und in welcher der Einlass 60 mit dem Auslass 64 verbunden ist, und eine Sperr- oder Fahrstellung, welche sich bei einem Vorratsdruck der Betriebsbremse größer als ein vorbestimmter Druckgrenzwert einstellt und in welcher der Einlass 60 gegenüber dem Auslass 64 gesperrt ist. Bei dem 2/2 Wegeventil 58 handelt es sich bevorzugt um ein vom Steuerdruck an seinem pneumatischen Steueranschluss 66 gesteuertes Membranventil, welches beispielsweise in seine Durchlassstellung federbelastet ist. Wenn dann der Vorratsdruck der Betriebsbremse unter den Druckgrenzwert fällt, sorgt die Federbelastung des mit der Membrane verbundenen Ventilglieds für ein automatisches Umschalten des 2/2-Wegeventils 58 in die Durchlass- oder Entlüftungsstellung.

Das 2/2-Wegeventil 58 kann in die elektropneumatische Bremssteuereinrichtung 30 integriert sein, stellt hier bevorzugt aber eine separate Baueinheit dar.

Die erste Druckverbindung 62 zweigt von der Steuerluftleitung 52 an einer Stelle zwischen dem Auslass 38 der Ventileinrichtung 36 und dem Steuereingang 40 des Relaisventils 42 ab, so dass hier beispielsweise der Steuereingang 40 des Relaisventils 42 ohne weitere Zwischenschaltung von Magnetventilen unmittelbar oder direkt mit dem Einlass 60 des 2/2-Wegeventils 58 verbunden ist. Insofern kann der Anschluss des Einlasses 60 des 2/2-Wegeventils 58 an den Steuereingang 40 des Relaisventils 42 durchaus als unmittelbar oder direkt bezeichnet werden.

Bevorzugt ist eine Auswahleinrichtung hier in Form eines Wechselventils 72 (Select High) zur Weitersteuerung des höheren Vorratsdrucks aus den Vorratsdrücken der Druckluftvorräte 8, 10 an den pneumatischen Steueranschluss 66 des 2/2-Wegeventils 58 vorgesehen. Hierzu steht der pneumatische Steueranschluss 66 über eine zweite Druckverbindung 74 mit einem Auslass 76 des Wechselventils 72 in Verbindung, dessen erster Einlass 78 mit dem ersten Druckluftvorrat 8 des ersten Betriebsbremskreises und dessen zweiter Einlass 80 mit dem zweiten Druckluftvorrat 10 des zweiten Betriebsbremskreises verbunden sind.

Das Wechselventil 72 bildet dann ein logisches "ODER"-Glied in Bezug auf die Vorratsdrücke in den Druckluftvorräten 8, 10. Durch diese Maßnahmen wird der Steuerdruck für das 2/2-Wegeventil 58 durch den jeweils höheren Vorratsdruck der Betriebsbremskreise gebildet.

Besonders bevorzugt ist zwischen dem ersten Druckluftvorrat 8 und dem ersten Einlass 78 des Wechselventils und zwischen dem zweiten Druckluftvorrat 10 und dem zweiten Einlass 80 des Wechselventils jeweils eine Drosseleinrichtung 82, 84 vorgesehen ist. Der Drosselquerschnitt ist bei beiden Drosseleinrichtungen 82, 84 wenigstens so klein, dass ein Volumenstrom, der zwischen dem ersten Einlass 78 und dem zweiten Einlass 80 des Wechselventils 72 unbeabsichtigt entstanden ist, beispielsweise durch eine undefinierte Zwischenstellung des Ventilglieds des Wechselventils 72, kleiner ist als ein minimaler Liefervolumenstrom, welchen der Kompressor 2 unter minimaler Förderleistung in die Druckluftvorräte 8, 10 nachzuliefern vermag.

Die elektrischen Komponenten der Bremsanlage 1 wie Spulen der Magnetventile, Sensoreinrichtungen Steuereinrichtung etc. werden von einer elektrischen Energiequelle wie einer Batterie 86 stromversorgt.

Vor diesem Hintergrund ist die Funktionsweise der Bremsanlage 1 im Hinblick auf die Funktionstüchtigkeit der elektrischen Energieversorgung 86 wie folgt:

Bei intakter elektrischer Energieversorgung liefert der Kompressor 2 bei einem durch Betätigung des Bremspedals der Betriebsbremse bedingtem Absenken des Vorratsdrucks in den Druckluftvorräten 8, 10 der beiden Betriebsbremskreise durch Nachförderung entgegen, so dass der Druckgrenzwert unter diesen Umständen nicht unterschritten wird. Dadurch verbleibt oder schaltet das 2/2-Wegeventil 58 in der Sperr- oder Fahrstellung, in der die Steuerluftleitung 52 des Relaisventils 42 gegenüber der Drucksenke 68 gesperrt ist.

Bei einem Ausfall der elektrischen Energieversorgung 86 fällt jedoch in der Regel die Antriebsmaschine und dadurch auch die Nachförderung durch den Kompressor 2 aus, so dass bei wiederholter Betätigung der Betriebsbremse die Druckluftvorräte 8, 10 der Betriebsbremskreise entleert und dadurch der als Steuerdruck für das 2/2-Wegeventil 58 wirkende Vorratsdruck unter den Druckgrenzwert fällt. Das 2/2-Wegeventil 58 schaltet dann automatisch z.B. durch Federbelastung in seine Entlüftungs- oder Parkstellung, in welcher die Steuerluftleitung 52 entlüftet und die Federspeicherbremse bzw. die an den Arbeitsanschluss 44 des Relaisventils 42 angeschlossenen Federspeicherbremszylinder zugespannt werden, um die Park- oder Feststellbremse zuzuspannen.

Der Druckabfall in der Steuerluftleitung 52 wird über den Anschluss 38 auch in die Ventileinrichtung 36 eingesteuert, welche ausgebildet ist, dass sie bei einem solchen Druckabfall an ihrem Anschluss 38 an den zweiten Ausgangsanschluss 34 für das Anhängersteuerventil 22ein einer Parkstellung repräsentierendes Drucksignal einsteuert. Dieses Drucksignal kann in einer Be- oder Entlüftung des zweiten Anschlusses 34 bestehen, je nachdem ob die Bremsen des Anhängers beim Parken zugespannt oder gelöst sein sollen. Der Druckabfall in der Steuerluftleitung 52 bzw. am Anschluss 38 sorgt beispielsweise an einem pneumatischen Steuereingang eines (ebenfalls) pneumatisch gesteuerten Bistabilventils innerhalb der Ventileinrichtung 36 dafür, das das Bistabilventil das die Parkstellung repräsentierende Drucksignal an den zweiten Ausgangsanschluss 34 für das Anhängersteuerventil 22 aussteuert.

Bevorzugt sollen hier auch die Anhängerbremsen beim Parken zugespannt werden. Da Anhängersteuerventile 22 in Bezug auf den Eingangsdruck invertierend wirken, wird bei dem durch den Ausfall der elektrischen Energieversorgung 86 bedingten Schalten des 2/2-Wegeventils 58 in die Durchlass- oder Parkstellung und dem dadurch hervorgerufenen Druckabfall in der Steuerluftleitung und damit am Anschluss 38 die Ventileinrichtung 36 so gesteuert, dass der Steuerdruck am zweiten Ausgangsanschluss 34 und auch am Anhängersteuerventil 22 reduziert und dadurch der Bremsdruck für die Bremsen im Anhänger auf Zuspanndruck erhöht wird. Dadurch werden bei einem Ausfall der elektrischen Energieversorgung 86 bevorzugt nicht nur die Federspeicherbremszylinder des Zugfahrzeugs, sondern auch die Betriebsbremsen des Anhängers automatisch zugespannt.

Durch das Wechselventil 72 wird der Steuerdruck für das 2/2-Wegeventil 58 durch den jeweils höheren Vorratsdruck der Betriebsbremskreise gebildet, so dass nichts bereits ein Ausfall eines einzigen Betriebsbremskreises, z.B. aufgrund einer Leckage zu einem Vorratsdruck in diesem Betriebsbremskreis führt, der unterhalb des Druckgrenzwerts liegt und dann ein unnötiges Umschalten des 2/2-Wegeventils 58 in die Durchlass- oder Parkstellung führt, da in einem solchen Leckagefall nicht zwangsläufig auch ein Ausfall der elektrischen Energieversorgung 86 vorliegen muss.

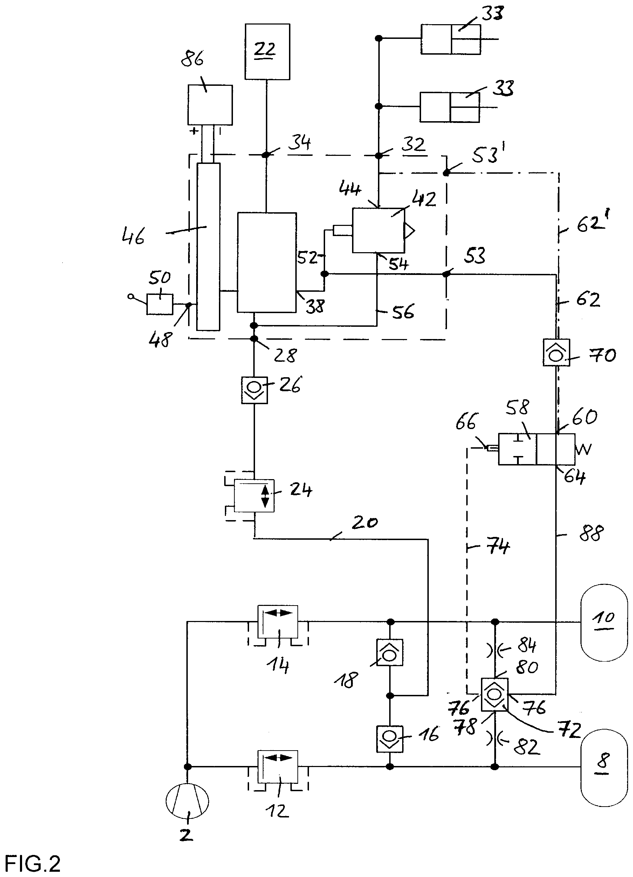

Bei dem in Fig.2 gezeigten weiteren Ausführungsbeispiel sind identische bzw. gleich wirkende Bauteile durch die gleichen Bezugszeichen gekennzeichnet. Im Unterschied zu Fig.1 ist die Druckluftversorgungsleitung 20 für den Feststellbremskreis beispielsweise über zwei Rückschlagventile 16, 18 abgesichert, welche an die Druckluftversorgungsleitungen 4, 6 der beiden Betriebsbremskreise angeschlossen sind.

Außerdem findet die Entlüftung der Steuerluftleitung 52 durch das 2/2-Wegeventil 58 nicht über eine Entlüftung 68 in die Atmosphäre statt, sondern durch Entlüftung über eine mit dem Auslass 64 verbundene Druckleitung 88 an den Auslass 76 des Wechselventils 72 und von dort entweder in den ersten Druckluftvorrat 8 oder in den zweiten Druckluftvorrat 10, je nachdem, welcher Druckluftvorrat 8 oder 10 den größeren Vorratsdruck führt. Da die Druckluftvorräte 8, 10 der Betriebsbremskreise aufgrund des Ausfalls der Energieversorgung entlüftet werden oder bereits sind, ist zwischen der Steuerluftleitung 52 und dem jeweiligen Druckluftvorrat 8, 10 das notwendige Druckgefälle vorhanden.

Weiterhin ist bei der Ausführungsform von Fig.2 in der ersten Druckverbindung 62 zwischen dem Einlass 60 des 2/2-Wegeventils 58 und der Steuerluftleitung 52 ein Rückschlagventil 70 angeordnet, durch welches eine Druckluftströmung von der Steuerluftleitung 52 zum Einlass 60 des 2/2-Wegeventils 58 bzw. zur Drucksenke 58 in der Durchlassstellung ermöglicht, aber eine Druckluftströmung von dem Einlass 60 bzw. der Drucksenke 58 in die Steuerluftleitung 52 unterbunden wird. Das Rückschlagventil 70 verhindert damit eine Druckbeaufschlagung der Steuerluftleitung 52 und damit ein Lösen der Federspeicherbremse des Zugfahrzeugs bzw. der Anhängerbremsen über das in Durchlassstellung geschaltete 2/2-Wegeventil 58.

### Bezugszeichenliste

- 1: Bremsanlage
- 2: Kompressor
- 4: Druckluftversorgungsleitung
- 6: Druckluftversorgungsleitung
- 8: Druckluftvorrat
- 10: Druckluftvorrat
- 12: Überströmventil
- 14: Überströmventil
- 16: Rückschlagventil
- 18: Rückschlagventil
- 20: Druckluftversorgungsleitung
- 22: Anhängersteuerventil
- 24: Überströmventil
- 26: Rückschlagventil
- 28: Vorratsanschluss
- 30: Bremssteuereinrichtung
- 32: erster Ausgangsanschluss
- 33: Federspeicherbremszylinder
- 34: zweiter Ausgangsanschluss
- 36: Ventileinrichtung
- 38: Anschluss
- 40: Steuereingang
- 42: Relaisventil
- 44: Arbeitsausgang
- 46: Steuereinrichtung
- 48: Feststellbremssignalanschluss
- 50: Feststellbremssignalgeber
- 52: Steuerluftleitung
- 53: dritter Ausgangsanschluss
- 54: Vorratseingang
- 56: Druckluftverbindung
- 58: 2/2-Wegeventil
- 60: Einlass
- 62: erste Druckverbindung
- 64: Auslass
- 66: Steueranschluss
- 68: Entlüftung
- 70: Rückschlagventil
- 72: Wechselventil
- 74: zweite Druckverbindung
- 76: Auslass
- 78: erster Einlass
- 80: zweiter Einlass
- 82: Drosseleinrichtung
- 84: Drosseleinrichtung
- 86: Batterie
- 88: Druckleitung

## Patentansprüche

1. Elektropneumatische Bremssteuereinrichtung (30) zur Steuerung einer Feststellbremse eines Fahrzeugs mit Betriebbremse und Feststellbremse, mit
a) einer von einem elektronischen Steuereinrichtung (46) gesteuerten, und über einen Vorratsanschluss (28) mit Druckluft aus einem Druckluftvorrat (8, 10) versorgbaren elektromagnetischen Ventileinrichtung (36),
b) einem Feststellbremssignalanschluss (48) zum Einsteuern von durch einen elektrischen Feststellbremssignalgeber (50) ausgesteuerten Feststellbremssignalen,
c) einer von der elektromagnetischen Ventileinrichtung (36) pneumatisch gesteuerten luftmengenverstärkenden Ventileinrichtung (42) mit einem Arbeitsausgang (44), welcher mit einem ersten Ausgangsanschluss (32) für wenigstens einen Federspeicherbremszylinder (33) verbindbar ist, welcher zum Zuspannen des wenigstens einen Federspeicherbremszylinders (33) entlüftet und zum Lösen belüftet wird, wobei
d) zwischen einem Auslass (38) der elektromagnetischen Ventileinrichtung (36) und einem pneumatischen Steuereingang (40) der luftmengenverstärkenden Ventileinrichtung (42) eine Steuerluftleitung (52) vorgesehen ist, **gekennzeichnet durch**
e) ein pneumatisch gesteuertes 2/2-Wegeventil (58), mit einem Einlass (60), welcher mit der Steuerluftleitung (52) oder mit dem Arbeitsausgang (44) der luftmengenverstärkenden Ventileinrichtung (42) verbindbar oder verbunden ist, einem mit einer Drucksenke (68) verbundenen Auslass (64) und mit einem pneumatischen Steueranschluss (66) für einen Vorratsdruck der Betriebsbremse, wobei
f) das pneumatisch gesteuerte 2/2-Wegeventil (58) zwei Stellungen aufweist, eine Durchlassstellung, welche sich bei einem Vorratsdruck der Betriebsbremse kleiner als ein vorbestimmter Druckgrenzwert einstellt und in welcher der Einlass (60) mit dem Auslass (64) verbunden ist, und eine Sperrstellung, welche sich bei einem Vorratsdruck der Betriebsbremse größer als ein vorbestimmter Druckgrenzwert einstellt und in welcher der Einlass (60) gegenüber dem Auslass (64) gesperrt ist.

2. Elektropneumatische Bremssteuereinrichtung nach Anspruch 1, **dadurch gekennzeichnet, dass** das 2/2-Wegeventil (58) durch ein Membranventil gebildet wird.

3. Elektropneumatische Bremssteuereinrichtung nach Anspruch 1 oder 2, **dadurch gekennzeichnet, dass** sie eine Baueinheit darstellt.

4. Elektropneumatische Bremssteuereinrichtung nach einem der vorhergehenden Ansprüche, **dadurch gekennzeichnet, dass** das 2/2-Wegeventil (58) gegen die Wirkung eines am pneumatischen Steueranschluss (66) anstehenden Vorratsdrucks der Betriebsbremse in die Durchlassstellung federbelastet ist.

5. Elektropneumatische Bremssteuereinrichtung nach einem der vorhergehenden Ansprüche, **dadurch gekennzeichnet, dass** sie wenigstens einen zweiten Ausgangsanschluss (34) für ein Anhängersteuerventil (22) aufweist, wobei die Ventileinrichtung (36) mit der Steuerluftleitung (52) verbunden und ausgebildet ist, dass bei einem durch die Durchlassstellung des pneumatisch gesteuerten 2/2-Wegeventils (58) bedingten Druckabfall in der Steuerluftleitung (52) ein den Zustand Parken repräsentierendes Drucksignal an den zweiten Ausgangsanschluss (34) aussteuert.

6. Elektropneumatische Bremssteuereinrichtung nach einem der vorhergehenden Ansprüche, **dadurch gekennzeichnet, dass** die Drucksenke (68) durch einen in die Atmosphäre mündenden Entlüftungsanschluss oder durch wenigstens einen Druckluftvorrat (8, 10) gebildet wird.

7. Elektropneumatische Bremssteuereinrichtung nach Anspruch 6, **dadurch gekennzeichnet, dass** in der ersten Druckverbindung (62) zwischen dem Einlass (60) des 2/2-Wegeventils (58) und der Steuerluftleitung (52) ein Rückschlagventil (70) angeordnet ist, durch welches eine Druckluftströmung von der Steuerluftleitung (52) zum Auslass (64) ermöglicht, aber eine Druckluftströmung vom Auslass (64) in die Steuerluftleitung (52) unterbunden wird.

8. Elektropneumatische Bremsanlage (1) eines Fahrzeugs umfassend eine elektropneumatische Bremssteuereinrichtung (30) nach einem der vorhergehenden Ansprüche, mit einer Betriebsbremse und einer Feststellbremse, wobei die Betriebsbremse ein Bremspedal und wenigstens einen von einem Kompressor (2) mit Druckluft versorgten Druckluftvorrat (8, 10) aufweist, aus welchem abhängig von einer Betätigung des Bremspedals Druckluft in druckluftbetätigbare Betriebsbremszylinder einsteuerbar ist, und wobei die Feststellbremse einen elektrischen Feststellbremssignalgeber (50) aufweist, welcher Feststellbremssignale in den Feststellbremssignalanschluss (48) der elektropneumatischen Bremssteuereinrichtung (30) einsteuert, deren erster Ausgangsanschluss (32) an wenigstens einen Federspeicherbremszylinder angeschlossen ist, wobei der pneumatische Steueranschluss (66) des 2/2-Wegeventils (58) mit dem wenigstens einen Druckluftvorrat (8, 10) der Betriebsbremse mittelbar oder unmittelbar verbunden ist.

9. Elektropneumatische Bremsanlage nach Anspruch 8, **dadurch gekennzeichnet, dass** wenigstens zwei Betriebsbremskreise mit jeweils einem eigenen Druckluftvorrat (8, 10) vorgesehen sind, nämlich ein erster Betriebsbremskreis mit einem ersten Druckluftvorrat (8) und ein zweiter Betriebsbremskreis mit einem zweiten Druckluftvorrat (10), wobei eine Auswahleinrichtung (72) zur Weitersteuerung des höheren Vorratsdrucks aus den Vorratsdrücken der Druckluftvorräte (8, 10) an den pneumatischen Steueranschluss (66) des 2/2-Wegeventils (58) vorgesehen ist, mit einem ersten, mit dem ersten Druckluftvorrat (8) des ersten Betriebsbremskreises verbundenen Einlass (78), einem zweiten mit dem zweiten Druckluftvorrat (10) des zweiten Betriebsbremskreises verbundenen Einlass (80) und einem mit dem pneumatischen Steueranschluss (66) des 2/2-Wegeventils (58) verbundenen Auslass (76).

10. Elektropneumatische Bremsanlage nach Anspruch 9, **dadurch gekennzeichnet, dass** die Auswahleinrichtung (72) durch ein Wechselventil gebildet wird.

11. Elektropneumatische Bremsanlage nach Anspruch 9 oder 10, **dadurch gekennzeichnet, dass** zwischen dem ersten Druckluftvorrat (8) und dem ersten Einlass (78) der Auswahleinrichtung (72) und dem zweiten Druckluftvorrat (10) und dem zweiten Einlass (80) der Auswahleinrichtung (72) jeweils eine Drosseleinrichtung (82, 84) vorgesehen ist, deren Drosselquerschnitt wenigstens so klein ist, dass ein Volumenstrom, der zwischen dem ersten Einlass (78) und dem zweiten Einlass (80) der Auswahleinrichtung (72) unbeabsichtigt entstanden ist, kleiner ist als ein minimaler Liefervolumenstrom, welchen der Kompressor (2) unter minimaler Förderleistung in die Druckluftvorräte (8, 10) nachzuliefern vermag.

12. Fahrzeug, umfassend eine elektropneumatische Bremsanlage (1) nach einem der Ansprüche 8 bis 11.

## Claims

1. Electropneumatic brake control device (30) for controlling a parking brake of a vehicle having a service brake and a parking brake, comprising
a) an electromagnetic valve device (36) which is controlled by an electronic control device (46) and can be supplied with compressed air from a compressed air store (8, 10) via a store connector (28),
b) a parking brake signal terminal (48) for inputting parking brake signals which are output by way of an electric parking brake signal transmitter (50),
c) a valve device (42) which is controlled pneumatically by the electromagnetic valve device (36) and boosts the air quantity, with an operating output (44) which can be connected to a first output port (32) for at least one spring brake cylinder (33), which operating output (44) is vented in order to apply the at least one spring brake cylinder (33) and is ventilated in order to release it,
d) a control air line (52) being provided between an outlet (38) of the electromagnetic valve device (36) and a pneumatic control input (40) of the valve device (42) which boosts the air quantity, **characterised by**
e) a pneumatically controlled 2/2-way valve (58), with an inlet (60) which can be connected or is connected to the control air line (52) or to the operating output (44) of the valve device (42) which boosts the air quantity, an outlet (64) which is connected to a pressure sink (68), and a pneumatic control port (66) for a supply pressure of the service brake,
f) the pneumatically controlled 2/2-way valve (58) having two positions, a passage position which is set at a supply pressure of the service brake which is lower than a predefined pressure limit value and in which the inlet (60) is connected to the outlet (64), and a shut-off position which is set at a supply pressure of the service brake which is higher than a predefined pressure limit value and in which the inlet (60) is shut off with respect to the outlet (64).

2. Electropneumatic brake control device according to claim 1, **characterised in that** the 2/2-way valve (58) is represented by a diaphragm valve.

3. Electropneumatic brake control device according to claim 1 or 2, **characterised in that** it represents a structural unit.

4. Electropneumatic brake control device according to any of the preceding claims, **characterised in that** the 2/2-way valve (58) is spring-loaded into the passage position counter to the action of a supply pressure of the service brake which prevails at the pneumatic control port (66).

5. Electropneumatic brake control device according to any of the preceding claims, **characterised in that** it has at least one second output port (34) for a trailer control valve (22), the valve device (36) being connected to the control air line (52) and being configured such that it outputs a pressure signal which represents the parked state to the second output port (34) in the case of a pressure drop in the control air line (52) which is brought about by way of the passage position of the pneumatically controlled 2/2-way valve (58).

6. Electropneumatic brake control device according to any of the preceding claims, **characterised in that** the pressure sink (68) is formed by way of a venting connector which opens to atmosphere or by way of at least one compressed air store (8, 10).

7. Electropneumatic brake control device according to claim 6, **characterised in that** a check valve (70) is arranged in the first pressure connection (62) between the inlet (60) of the 2/2-way valve (58) and the control air line (52), by way of which check valve (70) a compressed air flow from the control air line (52) to the outlet (64) is made possible, but a compressed air flow from the outlet (64) into the control air line (52) is suppressed.

8. Electropneumatic brake system (1) of a vehicle, comprising an electropneumatic brake control device according to any of the preceding claims, the brake system having a service brake and a parking brake, the service brake having a brake pedal and at least one compressed air store (8, 10) which is supplied with compressed air by a compressor (2) and from which compressed air can be input in a manner which is dependent on an actuation of the brake pedal into service brake cylinders which can be actuated by compressed air, and the parking brake having an electric parking brake signal transmitter (50) which inputs parking brake signals into the parking brake signal terminal (48) of an electropneumatic brake control device (30), the first output port (32) of which is connected to at least one spring brake cylinder, the pneumatic control port (66) of the 2/2-way valve (58) being connected indirectly or directly to the at least one compressed air store (8, 10) of the service brake.

9. Electropneumatic brake system according to claim 8, **characterised in that** at least two service brake circuits with in each case one dedicated compressed air store (8, 10) are provided, namely a first service brake circuit with a first compressed air store (8) and a second service brake circuit with a second compressed air store (10), a selection device (72) being provided for forwarding the higher supply pressure of the supply pressures of the compressed air stores (8, 10) to the pneumatic control port (66) of the 2/2-way valve (58), with a first inlet (78) which is connected to the first compressed air store (8) of the first service brake circuit, a second inlet (80) which is connected to the second compressed air store (10) of the second service brake circuit, and an outlet (76) which is connected to the pneumatic control port (66) of the 2/2-way valve (58).

10. Electropneumatic brake system according to claim 9, **characterised in that** the selection device (72) is represented by a shuttle valve.

11. Electropneumatic brake system according to claim 9 0r 10, **characterised in that** in each case one throttle device (82, 84) is provided between the first compressed air store (8) and the first inlet (78) of the selection device (72) and between the second compressed air store (10) and the second inlet (80) of the selection device (72), the throttle cross-section of which throttle device (82, 84) is at least so small that a volumetric flow which has occurred unintentionally between the first inlet (78) and the second inlet (80) of the selection device (72) is smaller than a minimum delivery volumetric flow which the compressor is capable of additionally delivering into the compressed air stores (8, 10) at a minimum delivery output.

12. Vehicle, comprising an electropneumatic brake system (1) according to any of claims 8 to 11.

## Revendications

1. Dispositif (30) électropneumatique de commande de freinage pour commander un frein de stationnement d'un véhicule ayant un frein de service et un frein de stationnement, comprenant
a) un dispositif (36) de vanne électromagnétique commandé par un dispositif (46) électronique de commande et pouvant être alimenté en air comprimé, à partir d'un réservoir (8, 10) d'air comprimé, par un raccord (28) de réservoir,
b) une borne (48) de signal de frein de stationnement pour entrer des signaux de frein de stationnement émis par un émetteur (50) électrique de signal de frein de stationnement,
c) un dispositif (42) de vanne augmentant les quantités d'air, commandé pneumatiquement par le dispositif (36) de vanne électromagnétique et ayant une sortie (44) de travail, qui peut être reliée à un premier raccord (32) de sortie d'un cylindre (33) de frein à ressort accumulateur, lequel, pour le serrage du au moins un cylindre (33) de frein à ressort accumulateur, est mis à l'atmosphère, et pour le desserrage, est alimenté en air, dans lequel
d) un conduit (52) pour de l'air de commande est prévu entre une sortie (38) du dispositif (36) de vanne électromagnétique et une entrée (40) de commande pneumatique du dispositif (42) de vanne augmentant les quantité d'air, **caractérisé par**
e) une vanne (58) à 2/2 voies, commandée pneumatiquement, ayant une entrée (60), qui est reliée, ou qui peut l'être, au conduit (52) pour de l'air de commande ou à la sortie (44) de travail du dispositif (42) de vanne augmentant les quantités d'air, une sortie (64) reliée à un puits (68) de pression et un raccord (66) pneumatique de commande pour une pression de réservoir du frein de service, dans lequel
f) la vanne (58) à 2/2 voies commandée pneumatiquement a deux position, une position de passage, qui s'établit pour une pression de réservoir du frein de service plus petite qu'une valeur limite de pression déterminée à l'avance et dans laquelle l'entrée (60) est reliée à la sortie (64), et une position de fermeture, qui s'établit lorsque la pression du réservoir du frein de service est plus grande qu'une valeur limite de pression déterminée à l'avance et dans laquelle l'entrée (60) est fermée par rapport à la sortie (64).

2. Dispositif électropneumatique de commande de freinage suivant la revendication 1, **caractérisé en ce que** la vanne (58) à 2/2 voies est formée d'une vanne à membrane.

3. Dispositif électropneumatique de commande de freinage suivant la revendication 1 ou 2, **caractérisé en ce qu'**elle constitue une unité de construction.

4. Dispositif électropneumatique de commande de freinage suivant l'une des revendications précédentes, **caractérisé en ce que** la vanne (58) à 2/2 voies est, dans la position de passage, soumise à l'action d'un ressort, à l'encontre de l'effet d'une pression de réservoir, s'appliquant au raccord (66) pneumatique de commande, du frein de service.

5. Dispositif électropneumatique de commande de freinage suivant l'une des revendications précédentes, **caractérisé en ce qu'**il a au moins un deuxième raccord (34) de sortie d'une vanne (22) de commande de remorque, le dispositif (36) de vanne étant relié au conduit (52) pour de l'air de commande et étant constitué de manière à ce que, s'il se produit, dans le conduit (52) pour de l'air de commande, un abaissement de la pression dû à la position de passage de la vanne (58) à 2/2 voies commandée pneumatiquement, un signal de pression, représentant l'état stationnement, sort sur le deuxième raccord (34) de sortie.

6. Dispositif électropneumatique de commande de freinage suivant l'une des revendications précédentes, **caractérisé en ce que** le puits (68) de pression est formé par un raccord de mise à l'atmosphère débouchant à l'atmosphère ou par au moins un réservoir (8, 10) d'air comprimé.

7. Dispositif électropneumatique de commande de freinage suivant la revendication 6, **caractérisé en ce que**, dans la première liaison (62) de pression, entre l'entrée (60) de la vanne (58) à 2/2 voies et le conduit (52) pour de l'air de commande, est monté un clapet (70) anti retour, par lequel un courant d'air comprimé du conduit (52) pour de l'air de commande à la sortie (64) est possible, mais un courant d'air comprimé de la sortie (64) au conduit (52) pour de l'air de commande est interdit.

8. Système (1) électropneumatique de freinage d'un véhicule, comprenant un dispositif (30) électropneumatique de commande de freinage suivant l'une des revendications précédentes, comprenant un frein de service et un frein de stationnement, le frein de service ayant une pédale de frein et au moins un réservoir (8, 10) d'air comprimé alimenté en air comprimé par un compresseur (2), réservoir à partir duquel, en fonction d'un actionnement de la pédale de frein, de l'air comprimé peut entrer dans un cylindre de frein de service à actionnement par de l'air comprimé, et dans lequel le frein de stationnement a un émetteur (50) de signal électrique de frein de stationnement, lesquels signaux de frein de stationnement entrent dans la borne (48) de signal de frein de stationnement du dispositif (30) électropneumatique de commande de frein, dont le premier raccord (32) de sortie est raccordé à au moins un cylindre de frein à ressort accumulateur, le raccord (66) pneumatique de commande de la vanne (58) à 2/2 voies étant relié directement ou indirectement au au moins un réservoir (8, 10) d'air comprimé du frein de service.

9. Système électropneumatique de freinage suivant la revendication 8, **caractérisé en ce qu'**il est prévu au moins deux circuits de frein de service ayant leur propre réservoir (8, 10) d'air comprimé, à savoir un premier circuit de frein de service ayant un premier réservoir (8) d'air comprimé et un deuxième circuit de frein de service ayant un deuxième réservoir (10) d'air comprimé, un dispositif (72) de sélection étant prévu pour acheminer la pression de réservoir la plus haute, parmi les pressions des réservoirs (8, 10) d'air comprimé, au raccord (66) pneumatique de commande de la vanne (58) à 2/2 voies, comprenant une première entrée (78) reliée au première réservoir (8) d'air comprimé du premier circuit de frein de service, une deuxième entrée (80) reliée au deuxième réservoir (10) d'air comprimé du deuxième circuit de frein de service et une sortie (76) reliée au raccord (66) pneumatique de commande de la vanne (58) à 2/2 voies.

10. Système électropneumatique de freinage suivant la revendication 9, **caractérisé en ce que** le dispositif (72) de sélection est formé par une soupape à deux voies.

11. Système électropneumatique de freinage suivant la revendication 9 ou 10, **caractérisé en ce qu'**il est prévu, entre le premier réservoir (8) d'air comprimé et la première entrée (78) du dispositif (72) de sélection et le deuxième réservoir (10) d'air comprimé et la deuxième entrée (80) du dispositif (72) de sélection, respectivement un dispositif (82, 84) d'étranglement, dont la section d'étranglement est au moins si petite qu'un courant en volume, qui se crée de manière intempestive entre la première entrée (78) et la deuxième entrée (80) du dispositif (72) de sélection, est plus petit qu'un courant en volume minimum de fourniture que le compresseur (2) peut, avec une puissance minimum de refoulement, fournir aux réservoirs (8, 10) d'air comprimé.

12. Véhicule comprenant un système (1) électropneumatique de freinage suivant l'une des revendications 8 à 11.
